# EUROPÄISCHE PATENTSCHRIFT

(11) **EP 3 350 453 B1**
(45) Veröffentlichungstag und Bekanntmachung des Hinweises auf die Patenterteilung: **16.02.2022**
(21) Anmeldenummer: 16754192.9
(22) Anmeldetag: 12.08.2016
(51) Int. Cl.: F15B 1/10

(54) **BALGSPEICHER, INSBESONDERE PULSATIONSDÄMPFER**
BELLOWS ACCUMULATOR, IN PARTICULAR A PULSATION DAMPER
ACCUMULATEURS DE SOUFFLET, EN PARTICULIER UN AMORTISSEUR DE PULSATION

(30) Priorität: 18.09.2015 DE 102015012253
(43) Veröffentlichungstag der Anmeldung: 25.07.2018
(73) Patentinhaber: Hydac Technology GmbH, 66280 Sulzbach (DE)
(72) Erfinder: BALTES, Herbert, 66679 Losheim (DE)
(74) Vertreter: Bartels, Martin Erich Arthur
(86) Internationale Anmeldenummer: PCT/EP2016/001389
(87) Internationale Veröffentlichungsnummer: WO 2017/045739

(56) Entgegenhaltungen:
- EP-A1- 0 391 320
- DE-A1- 1 625 474
- JP-A- H03 134 302
- JP-A- 2000 346 001
- JP-A- 2006 300 090

## Beschreibung

Die Erfindung betrifft einen Balgspeicher, insbesondere Pulsationsdämpfer, mit den Merkmalen im Oberbegriff von Anspruch 1.

Balgspeicher dieser Art sind Stand der Technik, vgI. beispielsweise WO 2011/079890 A1. Solche Balgspeicher werden bevorzugt in Hydrauliksystemen als Pulsationsdämpfer eingesetzt, um in Druckfluiden auftretende Druckspitzen zu reduzieren oder zu glätten. Bei Anwendungen, bei denen Druckspitzen mit hohen Frequenzen auftreten und die Faltenbälge mit hohen Vibrationslasten beaufschlagt sind, stoßen die bekannten Balgspeicher an ihre Grenzen. Insbesondere bei sicherheitsrelevanten Systemen, wie etwa bei hydraulischen Stellantrieben für Flügelklappen oder Leitwerksteile von Luftfahrzeugen, werden die bekannten Balgspeicher den an die Betriebssicherheit zu stellenden Anforderungen nicht gerecht.

Die DE 1 625 474 und die JP 2006-300090 beschreiben jeweils einen gattungsgemäßen Balgspeicher, insbesondere Pulsationsdämpfer, mit einem Faltenbalg, der in einem Speichergehäuse angeordnet zwei Medienräume, die eine Ölseite und eine Gasseite bilden, voneinander separiert und dessen Balgfalten zumindest teilweise entlang der Innenwand des Speichergehäuses bewegbar sind, wobei der Außendurchmesser der Balgfalten derart geringfügig kleiner gewählt ist als der zuordenbare Durchmesser der Innenwand des Speichergehäuses, dass Räume gebildet sind, die in Summe eine hydraulische Dämpfung für zumindest ein Medium bilden.

Weitere Balgspeicher gehen aus der JP H03-134302, der EP 0 391 320 A1 und der JP 2000-346001 hervor.

Im Hinblick auf diese Problematik stellt sich die Erfindung die Aufgabe, einen insbesondere als Pulsationsdämpfer einsetzbaren Balgspeicher zur Verfügung zu stellen, der sich auch bei hohen Pulsationsfrequenzen durch ein günstiges Betriebsverhalten und eine besonders effektive Dämpferwirkung auszeichnet.

Erfindungsgemäß ist diese Aufgabe durch einen Balgspeicher gelöst, der die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass die Größe der Räume für die Realisierung der hydraulischen Dämpfung auf der Ölseite derart gewählt ist, dass unter Einbezug des Öls in dem Spalt zwischen Außendurchmesser des Balges und Innenwand des Gehäuses eine Gleitführung der Balgfalten im Speichergehäuse erreicht ist, und dass die Größe des Spaltes, respektive das Spaltmaß, zwischen 3,0 bis 0,15 mm gewählt ist.

Es ist ferner vorgesehen, dass der Außendurchmesser der Balgfalten derart geringfügig kleiner gewählt ist als der zuordenbare Innenwanddurchmesser des Speichergehäuses, dass Zwischenräume gebildet sind, die in Summe eine hydraulische Dämpfung für zumindest das Öl bilden. Bei der gewählten, geringen Durchmesserdifferenz und entsprechend geringer Weite des zwischen der Außenseite des Balgs und der Innenwand des Gehäuses gebildeten Spalts ist zwischen aufeinanderfolgenden Faltenzwischenräumen eine der Anzahl der Balgfalten entsprechende Vielzahl von Drosselstellen gebildet, die bei Balgbewegungen, bei denen sich die Volumina der Zwischenräume verändern, von Anteilen des Öls durchströmt werden, das sich innerhalb des Spalts und innerhalb der Zwischenräume befindet. Besonders bei Pulsationen, die mit hohen Frequenzen und mit verhältnismäßig niedrigen Amplituden erfolgen, wie dies beispielsweise bei mittels Schraubenverdichtern gelieferten Druckfluiden der Fall ist, ist dadurch zusätzlich zur durch die Volumenänderungen des Faltenbalges bewirkten Dämpfung an der Balgaußenseite eine hydraulische Dämpfung erreicht.

Die Größe der Zwischenräume ist für die Realisierung der hydraulischen Dämpfung derart gewählt, dass unter Einbezug des Öls in dem Spalt zwischen Außendurchmesser des Balges und Innendurchmesser des Gehäuses eine Gleitführung der Balgfalten im Speichergehäuse erreicht ist, weil bei geringer Spaltweite eine Art Gleitlagerung mit vom Öl gebildetem Gleitfilm gebildet ist.

Die Spaltgröße, respektive das Spaltmaß, ist zwischen 3,0 mm bis 0,15 mm, besonders bevorzugt zwischen 2,0 mm für eine geringe hydraulische Dämpfung und 0,25 mm für eine extrem hohe hydraulische Dämpfung, gewählt. Bei derart gewähltem Spaltmaß geht der Spalt zwischen der Gleitführung einer jeweiligen Balgfalte an der zuordenbaren Innenwand des Speichergehäuses zumindest bei ausgezogenem Faltenbalg in Dämpfungsräume über, die von zwei benachbart angeordneten Balgfalten begrenzt sind.

In vorteilhafter Weise kann eine derartige Gleitführung eine Bewegung des Faltenbalges parallel zur Längsachse des Speichergehäuses ermöglichen und in Richtungen quer zur Längsachse erschweren. Während bei der erwähnten bekannten Lösung für einen Schutz des Faltenbalges vor übermäßigen, im Betrieb auftretenden Vibrationslasten ein die Außenseite des Balges umgebendes Hülsenteil vorgesehen ist, das am beweglichen Balgende angebracht ist, um eine umfängliche Führung für den Balg zu bilden, wirkt die erfindungsgemäß vorgesehene Gleitführung als hydrostatische Gleitführung. Dadurch ist für den Balg ein Schutz gegen übermäßige Vibrationsbelastung erreicht, ohne dass der Balg mit einer beweglichen Zusatzmasse belastet würde, wie mit dem Hülsenteil der bekannten Lösung, so dass ein optimales Ansprechverhalten und Dämpfungsverhalten bei hohen Frequenzen gewährleistet ist.

Bei vorteilhaften Ausführungsbeispielen kann in dem Ölraum zwischen Balgaußenseite und zugeordneter Innenseite des Speichergehäuses ein Öl mit hoher Viskosität, wie ein Phosphor-Säureester-Öl (HFD-R) vorhanden sein, während als Gas auf der Balginnenseite ein Arbeitsgas, wie Stickstoffgas, vorhanden sein kann. Bei Einsatz dieser Medien eignet sich der erfindungsgemäße Balgspeicher insbesondere für luftfahrttechnische Anwendungen, bei denen für die benutzen Medien entsprechende Sicherheitsvorschriften gelten, wie Schwerentflammbarkeit, Kältebetriebsgrenzen und dergleichen mehr.

Bei vorteilhaften Ausführungsbeispielen kann die Höhe des Faltenbalges in seinem ausgezogenen Zustand das Ein- bis Anderthalbfache eines Innendurchmessers betragen.

Mit besonderem Vorteil kann der Faltenbalg aus einem Metallwerkstoff gebildet sein und/oder die Faltenenden können spitz zulaufende Querschnitte aufweisen und/oder der Faltenbalg braucht im Bereich seiner Gleitführung im Speichergehäuse über keine zusätzlichen Führungseinrichtungen zu verfügen.

Bei einer bevorzugten Bauweise ist das eine Balgende an einem bewegbaren Endkörper angeordnet, wobei das andere Balgende des Faltenbalges an einem gehäusefesten Haltering festgelegt ist.

Mit besonderem Vorteil kann die Anordnung hierbei so getroffen sein, dass der bewegbare Endkörper das Innere des Faltenbalges gegenüber dem einen Ölanschluss des Speichergehäuses abschließt, kreisrund ausgebildet ist und vorspringende Führungsteile für die Anlage mit Innenwandteilen des Speichergehäuses aufweist, wobei zwischen den Führungsteilen des Endkörpers Öldurchtrittsstellen verlaufen. Trotz einer für das bewegbare Balgende gebildeten Seitenführung bleibt daher die Fluidverbindung zum Medienraum zwischen Balgaußenseite und Innenseite des Speichergehäuses bestehen.

Nachstehend ist die Erfindung anhand von in der Zeichnung dargestellten Ausführungsbeispielen im Einzelnen erläutert. Es zeigen:
- Fig. 1: einen Längsschnitt eines Ausführungsbeispiels des erfindungsge-mäßen Balgspeichers, wobei der Faltenbalg voll ausgezogen dar-gestellt ist;
- Fig. 2: eine vergrößert gezeichnete Darstellung des in Fig. 1 mit II be-zeichneten Bezirks; und
- Fig. 3: einen Längsschnitt eines nicht zur Erfindung gehörenden Ausfüh-rungsbeispiels, ebenfalls mit voll ausgezogenem Faltenbalg.

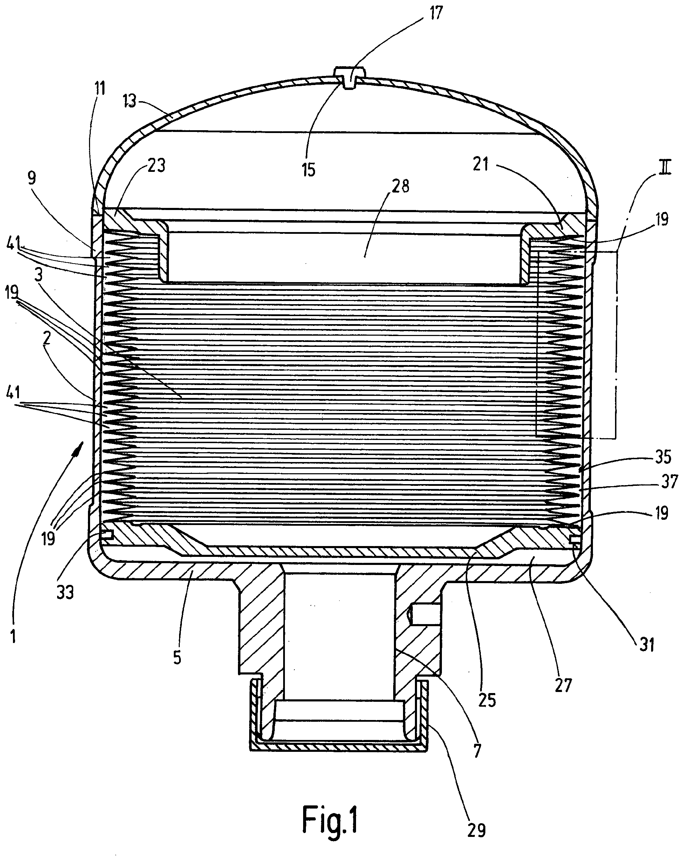

Mit Bezug auf die beigefügten Zeichnungen ist die Erfindung an Beispielen von Pulsationsdämpfern erläutert, die insbesondere dazu vorgesehen sind, um Druckspitzen zu reduzieren oder zu glätten, die in der Druckflüssigkeit im Hydrauliksystem eines Luftfahrzeuges mit hohen Frequenzen aufeinanderfolgen. Die Fig. 1 zeigt das als Ganzes mit 1 bezeichnete Speichergehäuse eines Ausführungsbeispiels mit einem Gehäusehauptteil 2, in dem ein metallischer Faltenbalg 3 aufnehmbar ist. Das Gehäusehauptteil 2 hat die Form eines kreiszylindrischen Topfes mit einem Topfboden 5, der bis auf einen zentral gelegenen Fluidanschluss 7 geschlossen ist. Am entgegengesetzten, in Fig. 1 obenliegenden offenen Ende weist das Hauptteil 2 eine Wandverdickung 9 auf, an deren freiem Ende entlang einer Schweißlinie 11 ein metallisches Gehäuseabschlussteil 13 angeschweißt ist. Dieses hat die Form einer konvex gewölbten Schale, die bis auf eine zentral gelegene Füllöffnung 15 geschlossen ist, die mittels eines Schweißkerns 17 verschlossen ist.

Der im Hauptteil 2 aufgenommene, metallische Faltenbalg 3 ist an seinem in Fig. 1 obenliegenden, offenen Balgende mit seiner letzten Balgfalte 19 an einem metallischen Haltering 21 angeschweißt, der einen verdickten Umfangsrand 23 aufweist, mit dem er am Speichergehäuse 1 derart festgelegt ist, dass der verdickte Umfangsrand 23 die Schweißlinie 11 zwischen Hauptteil 2 und Abschlussteil 13 übergreift, wobei der Schweißvorgang mittels Durchschweißen in einem Elektronenschweißverfahren (Laserschweißen) so durchgeführt wird, dass auch der Umfangsrand 23 des Halterings 21 festgeschweißt ist. Das entgegengesetzte, untere Ende des Balgs 3 ist durch einen metallischen, plattenförmigen Endkörper 25 geschlossen, an dem die unterste Balgfalte 19 angeschweißt ist.

Die Fig. 1 zeigt den Betriebszustand des voll ausgezogenen Faltenbalgs 3 bei leerer Ölseite 27, wobei der zugehörige Fluidanschluss 7 mittels einer aufgeschraubten Schutzkappe 29 geschlossen ist. Bei einem Einsatz bei luftfahrttechnischen Systemen bildet der Balg 3 das bewegbare Trennelement zwischen einem auf der Ölseite 27 befindlichen, viskosen Hydraulikfluid, wie einem Phosphor-Säureester-Öl (HFD-R), das als schwer entflammbare Flüssigkeit für luftfahrttechnische Einrichtungen zugelassen ist, und einem Arbeitsmedium, wie einem Arbeitsgas, wie Stickstoffgas, das sich unter einem Vorfülldruck auf der Gasseite 28 des Speichergehäuses 1 befindet, die durch den Innenraum des Balgs 3 sowie den oberhalb des Halterings 21 befindlichen Gehäuseteil gebildet ist.

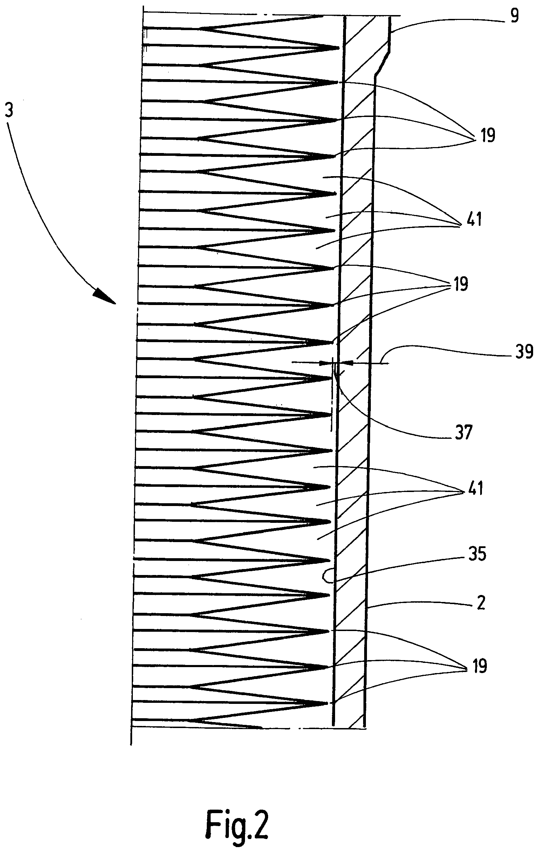

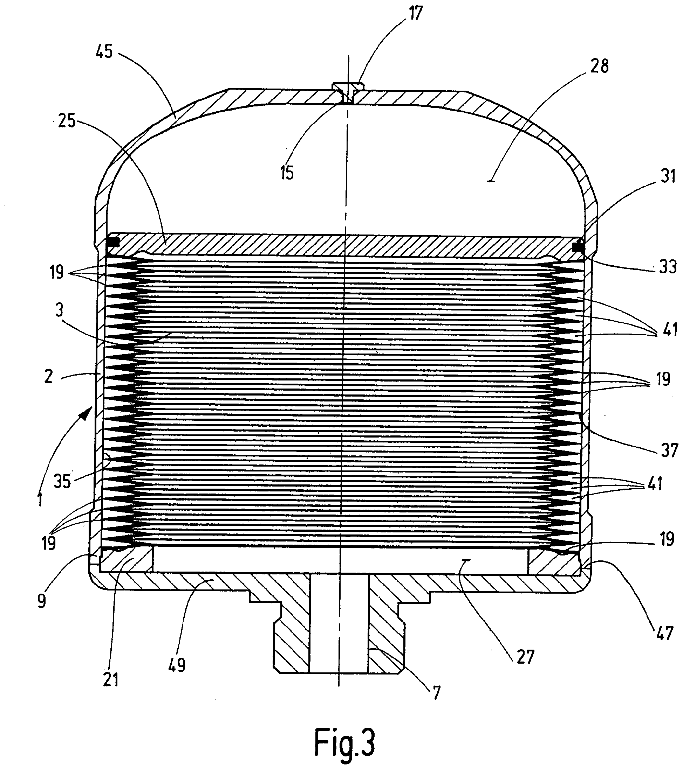

Für die das Balgvolumen verändernden Axialbewegungen des Endkörpers 25 ist dieser an seinem Umfangsrand 31 mittels eines Führungsringes 33 geführt, der aus einem Kunststoff guter Gleiteigenschaften, beispielsweise aus Tetrafluorethylen, gebildet ist. Um trotz der vom Führungsring 33 gebildeten Axialführung den Fluiddurchtritt von der an den Fluidanschluss 7 angrenzenden Ölseite 27 zur Außenseite des Balgs 3 zu ermöglichen, so dass auch der Bereich des Spaltes 37 zwischen Balgaußenseite und Gehäuseinnenwand 35 Teil der Ölseite 27 ist, hat der Führungsring 33 die Form eines Flachringes, der in der Weise geformt ist, wie dies bei einem eine vergleichbare Funktion ausfüllenden Führungsring gezeigt ist, der in den Fig. 2 und 3 des zum Stand der Technik oben erwähnten Dokuments WO 2011/079890 A1 dargestellt und mit 47 bezeichnet ist. Dementsprechend sind am Führungsring 33 umfänglich verteilte, radial vorspringende Führungsteile gebildet, die mit der Gehäuseinnenwand 35 in Kontakt sind und zwischen denen sich radial zurückgesetzte Lücken für den Fluiddurchtritt befinden.

Wie der Fig. 2 am deutlichsten entnehmbar ist, befindet sich zwischen der Innenwand 35 des Hauptteils 2 des Speichergehäuses 1 und dem durch die Spitzen der Balgfalten 19 gebildeten Außendurchmesser des Balgs 3 ein Spalt 37, dessen Spaltmaß oder Spaltweite in Fig. 2 mit Pfeilen 39 verdeutlicht ist. Zusammen mit den zumindest bei nicht vollständig zusammengedrücktem Balg 3 zwischen dessen Falten 19 gebildeten Zwischenräumen 41, deren Volumen sich bei den Balgbewegungen im Betrieb entsprechend verändert, sind zwischen Balgaußenseite und Gehäuseinnenwand 35 Dämpfungsräume als Bestandteil der Ölseite 27 gebildet. Wie aus Fig. 2 erkennbar ist, sind für die Fluidströmung, die sich bei den durch die Balgbewegungen im Betrieb stattfindenden Volumenänderungen der Faltenzwischenräume 41 ergeben, jeweils Dämpfungsdrosseln zwischen den Spitzen der Falten 19 und der Gehäuseinnenwand 35 gebildet, wobei das gewählte Spaltmaß den Drosselquerschnitt bestimmt. Zusätzlich zu der Pulsationsdämpfung aufgrund der gegen das Druckpolster des Arbeitsgases erfolgenden Balgbewegungen ergibt sich dadurch eine hydraulische Dämpfung an der Balgaußenseite. Der Übersichtlichkeit halber sind die Falten 19 und die Zwischenräume 41 zwischen den Falten 19 in den Fig. 1 und 2 nicht sämtlich beziffert.

Das Spaltmaß kann für eine zu erzielende Dämpfung entsprechend gewählt werden, beispielsweise eine Spaltweite von 2,0 mm für eine verhältnismäßig geringe Dämpfung oder 0,25 mm für eine starke Dämpfung. Bei diesen geringen Spaltweiten und einem hochviskosen Medium auf der Ölseite 27, wie einem Phosphor-Säureester-Öl, ist zwischen Gehäuseinnenwand 35 und der Außenseite des Balgs 3 ein Gleitfilm gebildet, der als Axialführung der Balgfalten 19 im Gehäuse 1 wirksam ist und einen Schutz für die Falten 19 gegen Vibrationsbelastungen bildet. Der erfindungsgemäße Balgspeicher ist daher in besonderem Maße für einen Einsatz als Dämpfer für Fluide geeignet, die mit hohen Frequenzen aufeinanderfolgende Druckspitzen aufweisen. Die Erfindung eignet sich auch deshalb für den Einsatz bei Pulsationen hohen Frequenzen, weil für die Führung der Balgfalten 19 keine zusätzliche, schwingende Masse am Balg 3 angebracht werden muss, wie dies bei der oben genannten, bekannten Lösung der Fall ist, wo am Balg ein die Falten umfassendes Hülsenteil vorgesehen ist.

Die Fig. 3 zeigt ein abgewandeltes Ausführungsbeispiel, bei dem das Speichergehäuse 1 am oberen Ende des kreiszylinderförmigen Hauptteils 2 durch ein gewölbtes, mit dem Hauptteil 2 zusammenhängendes Deckelteil 45 geschlossen ist. Das untere Ende des Hauptteils 2 ist entlang einer Schweißlinie 47 durch einen flachen Gehäuseboden 49 geschlossen, der dem Bodenteil 5 des ersten Ausführungsbeispiels entspricht und wie dieses einen zentralen Füllanschluss 7 für das Druckfluid aufweist. Der metallische Faltenbalg 3 ist bei diesem Ausführungsbeispiel zum Boden 49 offen, so dass das Innere des Faltenbalgs 3 die Ölseite 27 bildet. Der am offenen Ende des Balgs 3 mit der letzten Balgfalte 19 verschweißte Haltering 21 ist bei diesem Ausführungsbeispiel durch einen Flachring gebildet, der an der Schweißlinie 47 am unteren Ende des Gehäusehauptteils 2 festgelegt ist.

Wie beim ersten Ausführungsbeispiel ist der mit der zugewandten letzten Balgfalte 19 verschweißte Endkörper 25, der das geschlossene Ende des Balgs 3 bildet, axial verfahrbar. Wie beim ersten Ausführungsbeispiel weist der Endkörper 25 am Umfangsrand 31 den Führungskörper 33 mit Durchlässen auf, so dass der Spalt 37, der wie beim ersten Ausführungsbeispiel zwischen der Gehäuseinnenwand 35 und der Außenseite des Balgs 3 gebildet und in Fig. 2 mit dem Spaltmaß 39 verdeutlicht ist, zusammen mit den Zwischenräumen 41 zwischen den Falten 19 Dämpfungsräume bilden, mit zwischen den Spitzen der Falten 19 und der Innenwand 35 jeweils gebildeten Drosselstellen für die bei Bewegungen des Balgs 3 und Volumenänderungen der Zwischenräume 41 erfolgende Strömung des Arbeitsgases. Wie beim ersten Ausführungsbeispiel ist dadurch an der Außenseite des Balgs 3 eine zusätzliche Dämpfung erreicht. Wie in den Fig. 1 und 2 sind auch in Fig. 3 die Falten 19 und deren Zwischenräume 41 der Übersichtlichkeit halber nicht sämtlich beziffert.

## Patentansprüche

1. Balgspeicher, insbesondere Pulsationsdämpfer, mit einem Faltenbalg (3), der in einem Speichergehäuse (1) angeordnet ist, der zwei Medienräume (27, 28), die eine Ölseite (27) und eine Gasseite (28) bilden, voneinander separiert und dessen Balgfalten (19) zumindest teilweise entlang der Innenwand (35) des Speichergehäuses (1) bewegbar sind, wobei der Außendurchmesser der Balgfalten (19) derart geringfügig kleiner gewählt ist als der zuordenbare Durchmesser der Innenwand (35) des Speichergehäuses (1), dass Räume (37, 41) gebildet sind, die in Summe eine hydraulische Dämpfung für zumindest das Öl bilden, **dadurch gekennzeichnet, dass** die Größe der Räume (37, 41) für die Realisierung der hydraulischen Dämpfung auf der Ölseite (27) derart gewählt ist, dass unter Einbezug des Öls in dem Spalt (37) zwischen Außendurchmesser des Balges (3) und Innenwand (35) des Gehäuses (1) eine Gleitführung der Balgfalten (19) im Speichergehäuse (1) erreicht ist, und dass die Größe des Spaltes (37), respektive das Spaltmaß, zwischen 3,0 bis 0,15 mm gewählt ist.

2. Balgspeicher nach Anspruch 1, **dadurch gekennzeichnet, dass** die Gleitführung eine Bewegung des Faltenbalges (3) parallel zur Längsachse des Speichergehäuses (1) ermöglicht und in Richtungen quer zur Längsachse erschwert.

3. Balgspeicher nach Anspruch 1 oder 2, **dadurch gekennzeichnet, dass** in dem Ölraum (27) zwischen Balgaußenseite und zugeordneter Innenwand (35) des Speichergehäuses (1) ein Öl mit höherer Viskosität, wie ein Phosphor-Säureester-Öl (HFD-R), gegenüber dem Gas auf der Balginnenseite (28), wie Stickstoffgas, vorhanden ist.

4. Balgspeicher nach einem der vorstehenden Ansprüche, **dadurch gekennzeichnet, dass** die Größe des Spaltes (37), respektive das Spaltmaß, zwischen 2,0 mm für eine geringe hydraulische Dämpfung und 0,25 mm für eine extrem hohe hydraulische Dämpfung gewählt ist.

5. Balgspeicher nach einem der vorstehenden Ansprüche, **dadurch gekennzeichnet, dass** der Spalt (37) zwischen der Gleitführung einer jeweiligen Balgfalte (19) an der zuordenbaren Innenwand (35) des Speichergehäuses (1) zumindest bei ausgezogenem Faltenbalg (3) in Dämpfungsräume (41) übergeht, die von zwei benachbart angeordneten Balgfalten (19) begrenzt sind.

6. Balgspeicher nach einem der vorstehenden Ansprüche, **dadurch gekennzeichnet, dass** die Höhe des Faltenbalges (3) in seinem ausgezogenen Zustand das Ein- bis Anderthalbfache seines Innendurchmessers beträgt.

7. Balgspeicher nach einem der vorstehenden Ansprüche, **dadurch gekennzeichnet, dass** der Faltenbalg (3) aus einem Metallwerkstoff gebildet ist und/oder dass die Faltenenden spitz zulaufende Querschnitte aufweisen und/oder dass der Faltenbalg (3) im Bereich seiner Gleitführung im Speichergehäuse (1) über keine zusätzlichen Führungseinrichtungen verfügt.

8. Balgspeicher nach einem der vorstehenden Ansprüche, **dadurch gekennzeichnet, dass** das eine Balgende an einem bewegbaren Endkörper (25) angeordnet ist und dass andere Balgende des Faltenbalges (3) an einem gehäusefesten Haltering (21) festgelegt ist.

9. Balgspeicher nach Anspruch 8, **dadurch gekennzeichnet, dass** der bewegbare Endkörper (25) das Innere (28) des Faltenbalges (3) gegenüber einem Ölanschluss (7) des Speichergehäuses (1) abschließt, kreisrund ausgebildet ist und vorspringende Führungsteile für die Anlage mit Innenwandteilen (35) des Speichergehäuses (1) aufweist und dass zwischen den Führungsteilen des Endkörpers (25) Öldurchtrittsstellen verlaufen.

## Claims

1. Bellows accumulator, in particular a pulsation damper, having a bellows (3) which is arranged in an accumulator housing (1); that separates two media chambers (27, 28), forming an oil side (27) and a gas side (28), from each other; and whose bellows folds (19) are movable at least partially along the inner wall (35) of the accumulator housing (1), wherein the outer diameter of the bellows folds (19) is chosen to be slightly smaller than the associated diameter of the inner wall (35) of the accumulator housing (1) in such a manner that chambers (37, 41) are formed which overall form hydraulic damping at least for the oil, **characterised in that** the size of the chambers (37, 41) for implementing hydraulic damping on the oil side (27) is selected in such a manner that, including the oil in the gap (37) between the outer diameter of the bellows (3) and the inner wall (35) of the housing (1), a sliding guide of the bellows folds (19) is achieved in the accumulator housing (1) and that the size of the gap (37), or the gap width, is selected between 3.0 and 0.15 mm.

2. Bellows accumulator according to claim 1, **characterised in that** the sliding guide allows movement of the bellows (3) parallel to the longitudinal axis of the accumulator housing (1) and impedes it in directions transverse to the longitudinal axis.

3. Bellows accumulator according to claim 1 or 2, **characterised in that** a higher viscosity oil, such as a phosphoric acid ester oil (HFD-R) is present in the oil chamber (27) between the outside of the bellows and the associated inner wall (35) of the accumulator housing (1), as opposed to the gas on the inside of the bellows (28), such as nitrogen gas.

4. Bellows accumulator according to one of the preceding claims, **characterised in that** the size of the gap (37), or the gap width, is chosen between 2.0 mm for low hydraulic damping and 0.25 mm for extremely high hydraulic damping.

5. Bellows accumulator according to one of the preceding claims, **characterised in that** the gap (37) between the sliding guide of a particular bellows fold (19) on the associated inner wall (35) of the accumulator housing (1) merges, at least when the bellows (3) is extended, into damping chambers (41) which are bounded by two bellows folds (19) arranged adjacently.

6. Bellows accumulator according to one of the preceding claims, **characterised in that** the height of the bellows (3) in its extended state is one to one and a half times its inner diameter.

7. Bellows accumulator according to one of the preceding claims, **characterised in that** the bellows (3) is formed from a metal material and/or that the ends of the bellows have pointed cross-sections and/or that the bellows (3) has no additional guide devices in the region of its sliding guide in the accumulator housing (1).

8. Bellows accumulator according to one of the preceding claims, **characterised in that** the one bellows end is arranged on a movable end body (25) and the other bellows end of the bellows (3) is attached to retaining ring (21) which is fixed relative to the housing.

9. Bellows accumulator according to claim 8, **characterised in that** the movable end body (25) closes off the interior (28) of the bellows (3) with respect to an oil connection (7) of the accumulator housing (1), is circular in shape and has protruding guide parts for contact with inner wall parts (35) of the accumulator housing (1) and that oil passage points extend between the guide parts of the end body (25).

## Revendications

1. Accumulateur à soufflet, notamment amortisseur de pulsation, comprenant un soufflet (3) à plis, qui est disposé dans une enveloppe (1) d'accumulateur, qui sépare l'un de l'autre deux espaces (27, 28) pour des fluides, qui forment un côté (27) huile et un côté (28) gaz, et dont les plis (19) de soufflet peuvent se déplacer au moins en partie le long de la paroi (35) intérieure de l'enveloppe (1) de l'accumulateur, dans lequel le diamètre extérieur des plis (19) du soufflet sont choisis légèrement plus petits que le diamètre, pouvant être associé, de la paroi (35) intérieure de l'enveloppe (1) de l'accumulateur, de manière à former des espaces (37, 41), qui forment en somme un amortissement hydraulique au moins pour l'huile, **caractérisée en ce que** la dimension des espaces (37, 41) est, pour la réalisation de l'amortissement hydraulique du côté (27) huile, choisi de manière à obtenir, en incluant l'huile dans la fente (37) entre le diamètre extérieur du soufflet (3) et la paroi (35) intérieure de l'enveloppe (1), un guidage glissant des plis (19) du soufflet dans l'enveloppe (1) de l'accumulateur et **en ce que** la dimension de la fente (37), respectivement la mesure fente, est choisie comprise entre 3,0 jusqu'à 0,15 mm.

2. Accumulateur à soufflet suivant la revendication 1, **caractérisé en ce que** le guidage glissant rend possible un déplacement du soufflet (3) à plis, parallèlement à l'axe longitudinal de l'enveloppe (1) de l'accumulateur et le rend difficile dans des directions transversalement à l'axe longitudinal.

3. Accumulateur à soufflet suivant la revendication 1 ou 2, **caractérisé en ce que** dans l'espace (27) huile, entre le côté extérieur du soufflet et la paroi (35) intérieure associée de l'enveloppe (1) de l'accumulateur, il y a une huile d'une viscosité plus grande, comme une huile à un ester d'acide phosphorique (HFD-R), que celle du gaz du côté (28) intérieur du soufflet, comme de l'azote gazeux.

4. Accumulateur à soufflet suivant l'une des revendications précédentes, **caractérisé en ce que** la dimension de la fente (37), respectivement la mesure de la fente, est choisie comprise entre 2,0 mm pour un petit amortissement hydraulique, et 0,25 mm pour un amortissement hydraulique extrêmement grand.

5. Accumulateur à soufflet suivant l'une des revendications précédentes, **caractérisé en ce que** la fente (37) entre le guidage glissant d'un pli (19) respectif du soufflet sur la paroi (35) intérieure, pouvant être associée, de l'enveloppe (1) de l'accumulateur, se transforme, au moins lorsque le pli (3) à soufflet est déployé, en des espaces (41) d'amortissement, qui sont délimités par deux plis (19) du soufflet voisins.

6. Accumulateur à soufflet suivant l'une des revendications précédentes, **caractérisé en ce que** la hauteur du soufflet (3) à plis, dans son état déployé, représente de une fois à une fois et demie son diamètre intérieur.

7. Accumulateur à soufflet suivant l'une des revendications précédentes, **caractérisé en ce que** le soufflet (3) à plis est en un matériau métallique et/ou **en ce que** les extrémités des plis ont des sections transversales en pointe et/ou **en ce que** le soufflet (3) à plis n'a pas de dispositif de guidage supplémentaire dans la région de son guidage glissant dans l'enveloppe (1) de l'accumulateur.

8. Accumulateur à soufflet suivant l'une des revendications précédentes, **caractérisé en ce que** l'une des extrémités du soufflet est disposée sur une pièce (25) d'extrémité mobile et **en ce que** l'autre extrémité du soufflet (3) à plis est fixée à un anneau (21) de maintien fixé à l'enveloppe.

9. Accumulateur à soufflet suivant la revendication 8, **caractérisé en ce que** la pièce (25) d'extrémité mobile ferme l'intérieur (28) du soufflet (3) à plis, par rapport à un raccord (7) pour de l'huile de l'enveloppe (1) de l'accumulateur, est constituée en étant circulaire et a des parties de guidage en saillie pour le contact avec des parties (35) de paroi intérieure de l'enveloppe (1) de l'accumulateur et **en ce que** des points de passage d'huile s'étendent entre les parties de guidage de la pièce (25) d'extrémité.
